# EUROPÄISCHE PATENTANMELDUNG

(11) **EP 1 252 930 A1**
(43) Veröffentlichungstag der Anmeldung: **30.10.2002**
(21) Anmeldenummer: 01810415.8
(22) Anmeldetag: 27.04.2001
(51) Int. Cl.: B01L 3/02, B05B 7/06, B05B 11/00

(54) **Sprühkopf**

(71) Anmelder: Tecan Trading AG, 8708 Männedorf (CH)
(72) Erfinder: Ryser, Daniel, 8712 Stäfa (CH)
(74) Vertreter: OK pat AG

(57) **Zusammenfassung**

Auf ein mit einer Flüssigkeitszuleitung verbundenes Rohr (1) ist eine Halterung (2) aufgeschraubt, derart, dass sie durch Drehen längs des Rohres (1) verschiebbar ist. Das Rohr (1) ist mit Abstand von einer koaxialen, in der Halterung (2) fest verankerten Hülse (8) umgeben mit, an ihrem sich konisch verengenden vorderen Ende, einer Ausströmöffnung (10), deren Rand das eine Ausflussöffnung (6) tragende vordere Ende des Rohres (1), durch einen schmalen Ringspalt (11) von demselben getrennt, umgibt. Die Hülse (8) trägt seitlich einen Stutzen (12), an den eine Druckgaszuleitung anschliesst und der exzentrisch in den Zwischenraum (9) zwischen der Hülse (8) und dem Rohr (1) mündet, so dass einströmendes Druckgas einen Drehimpuls erhält. Wenn es aus dem Ringspalt (11) ausströmt, vermischt es sich intensiv mit der aus der Ausflussöffnung (6) austretenden Flüssigkeit und bildet mit derselben einen Ausströmkegel aus feinem, gleichmässigem Aerosol.

## Beschreibung

### Technisches Gebiet

Die Erfindung betrifft einen Sprühkopf für ein Laborgerät, z. B. für ein Pipettiergerät, in das der Sprühkopf eingesetzt werden kann. Er kann zum Feuchthalten von Gelen oder Membranen oder auch zum Besprühen von Pflanzen oder Pflanzenteilen wie z. B. Blättern, von Larven usw. mit diversen Flüssigkeiten dienen.

### Stand der Technik

Es sind Sprühköpfe bekannt, die giesskannenartig ausgebildet sind mit über eine Fläche verteilten kleinen Oeffnungen. Derartige Sprühköpfe sind mit verschiedenen Nachteilen behaftet, die vor allem ihre Einsatzmöglichkeiten im Laborbereich beeinträchtigen. So ist es nicht möglich, insbesondere bei wechselnden Drücken eine gleichmässige Verteilung der Flüssigkeit über eine grössere Fläche zu gewährleisten, insbesondere wenn die Oeffnungen verhältnismässig gross sind, so dass sich die Einzelstrahlen nicht hinreichend auflösen. Sind andererseits die Oeffnungen sehr klein, so verstopfen sie sich leicht, was wiederum die Gleichmässigkeit der Verteilung beeinträchtigt oder eine ordnungsgemässe Funktion überhaupt unmöglich macht. Zudem sind derartige Sprühköpfe u. U. verhältnismässig kompliziert und teuer in der Herstellung.

### Darstellung der Erfindung

Der Erfindung liegt die Aufgabe zu Grunde, einen Sprühkopf für Laborgeräte anzugeben, der nicht anfällig für Funktionsstörungen ist und zuverlässig eine gleichmässige Verteilung der Flüssigkeit gewährleistet. Diese Aufgabe wird durch den Sprühkopf, wie er im Anspruch 1 gekennzeichnet ist, gelöst.

Der erfindungsgemässe Sprühkopf ist nicht nur sehr zuverlässig, er gewährleistet auch eine intensive Durchmischung von Flüssigkeit und Gas und damit die Bildung eines sehr feinen Aerosols, das sich gleichmässig über einen Ausströmkegel verteilt. Er ist zudem einfach aufgebaut und kostengünstig herstellbar. Ausserdem kann er so ausgestaltet werden, dass die Form des Ausströmkegels in bestimmten Grenzen einstellbar ist.

### Kurze Beschreibung der Zeichnungen

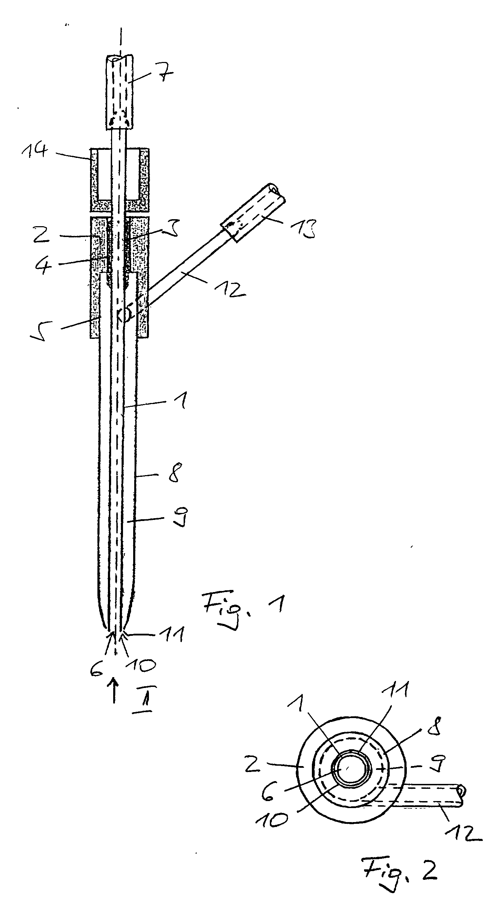

Im folgenden wird die Erfindung anhand von Figuren, welche lediglich ein Ausführungsbeispiel darstellen, näher erläutert. Es zeigen
- Fig. 1: einen Längsschnitt durch einen erfindungsgemässen Sprühkopf und
- Fig. 2: eine Ansicht des Sprühkopfs von Fig. 1 von unten, in Richtung des Pfeils II.

### Wege zur Ausführung der Erfindung

Der Sprühkopf weist ein Rohr 1 auf, auf welches eine etwa zylindrische Halterung 2 mit aufgeschraubt ist, wobei ein Aussengewinde 3 am Rohr 1 mit dem Gewinde einer dasselbe aufnehmenden Gewindebohrung 4 der Halterung 2 eingreift, die in eine koaxiale zylindrische Ausnehmung 5 an der Unterseite der Halterung 2 mündet. Diese kann daher durch Drehen längs des Rohres 1 verschoben werden. Dessen vorderes Ende, das weit vor der Ausnehmung 5 liegt, trägt eine Ausflussöffnung 6, während an sein oberhalb der Halterung 1 liegendes hinteres Ende ein Schlauch 7 anschliesst, der es z. B. mit einem Flüssigkeitsbehälter verbindet und als Flüssigkeitszuleitung dient.

In der Ausnehmung 5 ist eine Hülse 8 fest verankert, welche ebenfalls im wesentlichen rohrförmig ausgebildet ist und das Rohr 1 koaxial mit Abstand umgibt, so dass zwischen der Innenseite der Hülse 8 und der Aussenseite des Rohres 1 ein etwa zylindermantelförmiger Zwischenraum 9 liegt. Gegen das vordere Ende des Rohres 1 hin verengt sich die Hülse 8 und damit der Zwischenraum 9 annähernd konisch zu einer Ausströmöffnung 10, in welcher ungefähr das vordere Ende des Rohres 1 mit der Ausflussöffnung 6 liegt und zwar derart, dass das Rohr 1 dort vom Rand der Ausströmöffnung 10 mit geringem Abstand umgeben ist, so dass ein schmaler umlaufender Ringspalt 11 frei bleibt. Durch Verschieben der Halterung 2 wie oben erläutert kann die Hülse 8 und damit die Ausströmöffnung 10 axial verschoben werden. Letztere kann etwa mit dem vorderen Ende des Rohres 1 gleichauf liegen. Gewöhnlich wird jedoch die Ausströmöffnung 10 etwas nach oben versetzt sein, so dass das vordere Ende des Rohres 1 mit der Ausflussöffnung 6 geringfügig aus der Ausströmöffnung 10 herausragt.

Noch im Bereich der Ausnehmung 5 mündet in die Hülse 8 ein mit derselben einstückiger Stutzen 12, der durch eine Oeffnung oder einen Schlitz in dem Teil der Halterung 2 geführt ist, der die Seitenwand der Ausnehmung 5 bildet. Er ist etwas geneigt, so dass er mit dem oberhalb seiner Einmündung liegenden Teil der Hülse 8 einen spitzen Winkel einschliesst. Ausserdem ist er seitlich versetzt, so dass er nicht gegen die gemeinsame Achse der Hülse 8 und des Rohres 1 gerichtet ist, sondern etwa tangential in den zylindermantelförmigen Zwischenraum 9 mündet. Der Stutzen 12 dient als Druckgaszuleitung. An sein Ende schliesst ein Schlauch 13 an, der ihn z. B. mit einem Druckgastank oder einer Filteranlage und einer Pumpe verbindet.

Oberhalb der Halterung 2 ist am Rohr 1 ein ebenfalls etwa zylindrischer Adapter 14 befestigt, mittels dessen der Sprühkopf an einem Robotarm o. dgl. z. B. eines Pipettiergeräts befestigt werden kann, so dass er mindestens vertikal, vorzugsweise aber auch horizontal verschiebbar ist.

Das Rohr 1, die Halterung 2 und die Hülse 8 einschliesslich des Stutzens 12 bestehen vorzugsweise aus Edelstahl, der Adapter 14 aus eloxiertem Aluminium. Die Schläuche 7 und 13 können als Kunststoffschläuche ausgebildet sein. Das Rohr 1 kann beispielsweise ca. 1,4 mm Innen- und 2 mm Aussendurchmesser aufweisen, die Hülse ca. 3,4 mm Innen- und 4 mm Aussendurchmesser. Der Ringspalt 11 kann zwischen 0,05 mm und 0,15 mm breit sein, vorzugsweise liegt seine Breite bei ca. 0,1 mm.

Im Einsatz wird durch den Schlauch 7 und das Rohr 1 zu versprühende Flüssigkeit, z. B. Wasser oder ein Schädlingsbekämpfungsmittel o. dgl. zur Ausflussöffnung 6 geleitet und durch den Stutzen 12 Druckgas, z. B. Luft, Stickstoff oder Kohlendioxid in den Zwischenraum 9, so dass in demselben eine gegen die Ausströmöffnung 10 gerichtete Druckgasströmung entsteht, der wegen der exzentrischen Einleitung ein Drehimpuls aufgeprägt ist. Das aus dem Ringspalt 11 ausströmende Druckgas erzeugt im Bereich der Ausflussöffnung 6 einen Unterdruck, so dass dort Flüssigkeit austritt, mit der sich das Druckgas intensiv vermischt. Das Druckgas und die Flüssigkeit bilden daher einen feinen, gut durchmischten und gleichmässigen kegelförmig auseinanderlaufenden Aerosolstrahl. Ueber den Gasdruck und durch die Einstellung der axialen Position der Ausströmöffnung 10 relativ zur Ausflussöffnung 6 können Zusammensetzung und Oeffnungswinkel des Kegels über einen verhältnismässig weiten Bereich eingestellt werden.

Es sind verschiedene Abweichungen von der beschriebenen Ausführungsform möglich, ohne dass deswegen der Grundgedanke der Erfindung verlassen würde. So kann das Rohr etwa durch eine in der Nähe der Ausströmöffnung in der Hülse angeordnete Gleitführung zentriert sein. Der dem Druckgas aufgeprägte Drehimpuls kann auf andere Weise als beschrieben, z. B. durch im Zwischenraum angeordnete schräge Stege oder Flügel hergestellt werden, eventuell kann auch eine Gleitführung wie die oben angesprochene aus derartigen Stegen bestehen und damit gleichzeitig der Erzeugung des Drehimpulses dienen. Auch hinsichtlich der Materialien und Abmessungen sind Abweichungen vom weiter oben Angegebenen möglich.

### Bezugszeichenliste

- 1: Rohr
- 2: Halterung
- 3: Aussengewinde
- 4: Gewindebohrung
- 5: Ausnehmung
- 6: Ausflussöffnung
- 7: Schlauch
- 8: Hülse
- 9: Zwischenraum
- 10: Ausströmöffnung
- 11: Ringspalt
- 12: Stutzen
- 13: Schlauch
- 14: Adapter

## Patentansprüche

1. Sprühkopf für ein Laborgerät, mit einem Rohr (1), dessen vorderes Ende eine Ausflussöffnung (6) zur Abgabe einer Flüssigkeit aufweist, während an sein hinteres Ende eine Flüssigkeitszuleitung anschliesst, **dadurch gekennzeichnet, dass** er eine das Rohr (1) mit Abstand umgebende Hülse (8) umfasst sowie eine Druckgaszuleitung zur Zuführung von Druckgas in den zwischen der Hülse (8) und dem Rohr (1) liegenden Zwischenraum (9) und dass die Hülse (8)am vorderen Ende eine Ausströmöffnung (10) aufweist, in welcher das vordere Ende des Rohres (1) liegt, derart, dass zwischen dem Rohr (1) und dem Rand der Ausströmöffnung (10) ein den Austritt von Druckgas gestattender Ringspalt (11) frei bleibt.

2. Sprühkopf nach Anspruch 1, **dadurch gekennzeichnet, dass** die Hülse (8) längsverschiebbar gelagert ist, so dass die Ausströmöffnung (10) bezüglich des Rohres (1) vorschieb- und zurückziehbar ist.

3. Sprühkopf nach Anspruch 1 oder 2, **dadurch gekennzeichnet, dass** die Hülse (8) im wesentlichen rotationssymmetrisch ist und sich gegen die Ausströmöffnung (10) hin verengt.

4. Sprühkopf nach Anspruch 2 oder 3, **dadurch gekennzeichnet, dass** eine mit der Hülse (8) starr verbundene Gewindebohrung (4) mit einem Aussengewinde (3) am Rohr (1) eingreift, derart, dass die Hülse (8) durch Drehen längs des Rohres 1 verschiebbar ist.

5. Sprühkopf nach einem der Ansprüche 1 bis 4, **dadurch gekennzeichnet, dass** er eine am Rohr (1) gelagerte Halterung (2) aufweist, an welcher die Hülse (8) befestigt ist.

6. Sprühkopf nach einem der Ansprüche 1 bis 5, **dadurch gekennzeichnet, dass** die Druckgaszuleitung einen mit der Hülse (8) einstückigen, seitlich von derselben abstehenden Stutzen (12) umfasst.

7. Sprühkopf nach einem der Ansprüche 1 bis 6, **dadurch gekennzeichnet, dass** mindestens das Rohr (1) und die Hülse (8) aus Edelstahl bestehen.

8. Sprühkopf nach einem der Ansprüche 1 bis 7, **dadurch gekennzeichnet, dass** die Druckgaszuleitung oder die Verbindung derselben mit dem Ringspalt (11) derart ausgebildet ist, dass dem austretenden Druckgas ein Drehimpuls aufgeprägt wird.

9. Sprühkopf nach Anspruch 8, **dadurch gekennzeichnet, dass** die Druckgaszuleitung exzentrisch zur Achse des Rohres (1) in den Zwischenraum (9) zwischen dem Rohr (1) und der Hülse (8) mündet.

10. Sprühkopf nach einem der Ansprüche 1 bis 9, **dadurch gekennzeichnet, dass** am Rohr (1) ein Adapter (14) zur Befestigung des Sprühkopfs an einen Robotarm verbunden ist.
